# DEMANDE DE BREVET EUROPEEN

(11) **EP 4 496 176 A1**
(43) Date de publication de la demande: **22.01.2025**
(21) Numéro de dépôt: 24189052.4
(22) Date de dépôt: 17.07.2024
(51) Int. Cl.: H02J 7/00

(54) **DISPOSITIF DE RÉGULATION D'UN COURANT DE CHARGE POUR BATTERIE ET SYSTÈME DE GESTION D'ACCUMULATEURS DE BATTERIE COMPRENANT UN TEL DISPOSITIF**

(30) Priorité: 17.07.2023 FR 2307648
(71) Demandeur: Limatech, 31300 Toulouse (FR)
(72) Inventeur: POUYADOU, Luc, 31300 Toulouse (FR); ROBIN, Florence, 31300 Toulouse (FR); DI MEGLIO, Maxime, 31300 Toulouse (FR)
(74) Mandataire: AtlantIP International

(57) **Abrégé**

L'invention concerne un dispositif de régulation d'un courant de charge (6) pour une batterie (1), ledit dispositif étant un quadripôle configuré pour relier une batterie à un dispositif de charge (8), ledit dispositif (6) comprenant au moins un premier transistor (M₁), dit transistor de charge, et une thermistance (R₁) qui sont configurés pour réguler, en association, le courant de charge de la batterie (1) en fonction de la température.

## Description

Le contexte technique de la présente invention est celui des batteries électriques, et notamment des batteries à fort courant électrique, notamment supérieur à 50 A, et préférentiellement supérieure à 500 A, par exemple pour les applications aéronautiques et/ou aérospatiales.

Une batterie comprend généralement plusieurs modules ou cellules de batterie formant un ensemble qui peut par ailleurs être relié à un bus externe permettant la remontée des données vers un système de supervision, système généralement désigné sous le terme de système de gestion d'accumulateurs de batterie (ou « Battery Management System » en langue anglaise).

Le système de gestion d'accumulateurs de batterie est notamment configuré pour mesurer diverses grandeurs physiques relatives à la batterie, et aux modules de batterie, telles que des tensions, courants, températures, résistances internes, etc., mais comprend aussi des circuits de protection pour éviter que la batterie ne fonctionne dans des conditions anormales de fonctionnement, conditions qui peuvent endommager la batterie et causer des dégâts humains et/ou matériels.

On entend généralement par conditions anormales de fonctionnement : les surtensions, les surintensités, les sous-tensions, une température trop élevée de la batterie, des courts-circuits, etc. c'est-à-dire l'ensemble des paramètres ne correspondant pas à une plage nominale de fonctionnement de la batterie.

Les systèmes de gestion d'accumulateur comprennent ainsi des dispositifs de sécurité, tels qu'un dispositif de disjonction configuré pour couper les liaisons électriques de la batterie avec l'extérieur (et donc l'isoler électriquement) dans le cas où surviennent des conditions anormales de fonctionnement.

De tels dispositifs de disjonction sont généralement commandés par un circuit de commande, faisant partie du système de gestion, qui surveille les valeurs de certaines grandeurs électriques, par exemple la tension aux bornes de la batterie et qui déclenche le dispositif de disjonction si ces grandeurs électriques prennent des valeurs correspondant à des conditions anormales de fonctionnement.

Une batterie, par exemple Lithium-Ion, destinée à des applications aéronautiques et/ou aérospatiales peuvent présenter des tensions allant de quelques dizaines de volts à plus de mille volts, avec des courants de décharges compris entre une dizaine et une centaine d'ampères.

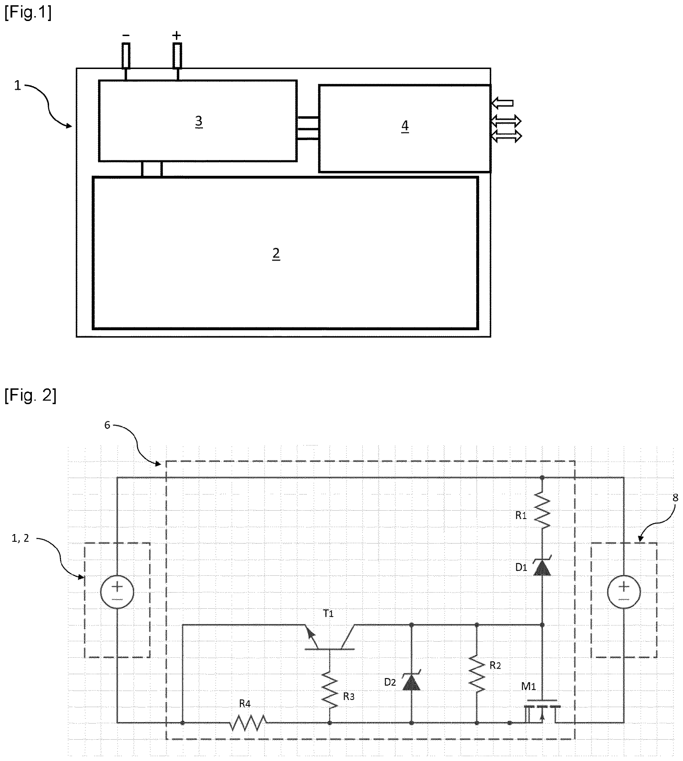

De telles batteries comprennent bien sûr plusieurs cellules, ou accumulateurs, sont disposés en série et en parallèle, on peut par exemple avoir 8 cellules de 3,3 Volts connectées en série comme cela est illustré à la [Fig. 1]. La somme de cette série de cellules de batterie engendre une tension globale d'environ 26,4 V.

Ainsi, lorsqu'il y a recharge de ces batteries, et plus particulièrement des cellules de batterie, il est nécessaire d'alimenter celles-ci avec un courant déterminé, par exemple 5 A, pendant la durée nécessaire au rechargement total desdites cellules de batterie. Cette opération de rechargement s'effectue généralement au moyen d'un dispositif ou circuit permettant de réguler le courant de charge délivré à la batterie à charger.

Malheureusement, les dispositifs ou circuits de l'art antérieur présentent des composants électroniques dont la montée en température (ou surchauffe) entraine une variation du courant de charge, variation supérieure à une valeur admissible et/ou de protection de la batterie. De plus, les dispositifs ou circuits de l'art antérieur peuvent également présenter des dépassements du courant de charge au démarrage de la charge de la batterie (par exemple de l'ordre de plusieurs dizaines d'ampères pendant 2 secondes), et/ou présenter une valeur de courant de charge moyen bien inférieure à une valeur cible désirée.

La présente invention se propose ainsi de remédier à au moins un des inconvénients précités en proposant un nouveau type de dispositif de régulation d'un courant de charge pour une batterie, ledit dispositif étant un quadripôle configuré pour relier une batterie à charger à un dispositif de charge,
ledit dispositif comprenant au moins un premier transistor, dit transistor de charge, et une thermistance qui sont configurés pour réguler, en association, le courant de charge de la batterie en fonction de la température.

Le présent dispositif de régulation du courant de charge pour la charge d'une batterie, ou une ou plusieurs cellules de batterie, est une solution peu onéreuse, robuste, facile à intégrer à un système de gestion d'accumulateurs de batterie, tout en permettant une meilleure régulation et/ou stabilité de ce courant de charge, en fonction de la température, notamment de la montée en température du transistor de charge.

Selon une caractéristique possible, ledit premier transistor est configuré pour fonctionner en régime linéaire.
Le fait d'utiliser le transistor de charge en régime linéaire permet notamment d'améliorer le contrôle (ou la régulation) sur la valeur du courant de charge, notamment car la chaleur générée par le transistor associé avec une thermistance permet une autorégulation.

Selon une autre caractéristique possible, la thermistance est couplée thermiquement avec le premier transistor.
De manière avantageuse, la piste sur laquelle le premier transistor est soudé est thermiquement couplée à la thermistance pour être chauffée par l'intermédiaire de la piste.

Selon une autre caractéristique possible, ledit dispositif comprend un deuxième transistor, dit transistor de régulation, le deuxième transistor étant configuré pour imposer un fonctionnement en régime linéaire au premier transistor. Avantageusement, un transistor de régulation participe à la régulation de la tension aux bornes du transistor de charge pour maintenir celui-ci dans un régime linéaire de fonctionnement.

Selon une autre caractéristique possible, le premier transistor est un transistor à effet de champs, et le deuxième transistor est un transistor de type NPN.

Selon une autre caractéristique possible, ledit transistor de charge présente une grille, un drain et une source, ladite grille étant configurée pour être connectée à la borne positive du dispositif de charge et à la borne positive de la batterie à charger, ledit drain étant configuré pour être connecté à la borne négative du dispositif de charge.
La source du transistor de charge est, quant à elle, avantageusement configurée pour être connectée à la borne négative de la batterie à chager.

Selon une autre caractéristique possible, la grille du transistor est configurée pour être connectée à la borne positive du dispositif de charge par l'intermédiaire d'au moins une diode et/ou une résistance.

Selon une autre caractéristique possible, le transistor de régulation présente une base, un émetteur et un collecteur, le collecteur du transistor de régulation étant connecté à la grille du transistor de charge, la base du transistor de régulation étant connectée à la source du transistor de charge.

Selon une autre caractéristique possible, le transistor de régulation est monté en parallèle du transistor de charge, c'est-à-dire que la base et le collecteur du transistor de régulation sont montés en parallèle de la source et la grille du transistor de charge.

Selon une autre caractéristique possible, la base du transistor de régulation est connectée à la source du transistor de charge par l'intermédiaire d'une résistance, dite troisième résistance.

Selon une autre caractéristique possible, le dispositif comprend une diode, dite deuxième diode, les première et deuxième diodes étant montées en un pont diviseur de diodes.
L'association des première et deuxième diodes permet de fermer le circuit lorsque le dispositif de charge présente une tension inférieure à la somme des tensions des première et deuxième diodes, ou lorsqu'il n'y a pas de dispositif de charge connecté, limitant ainsi la consommation électrique du dispositif lorsque celui-ci n'est pas utilisé

Selon une autre caractéristique possible, le dispositif comprend une résistance, dite deuxième résistance, la thermistance et la deuxième résistance étant montées en un pont diviseur résistif.
Le pont diviseur résistif permet la régulation du courant du transistor de charge en fonction de la température (dudit transistor). De plus, la deuxième résistance permet entre autres d'avoir une tension nulle au niveau de la grille du transistor de charge lorsque le circuit est non passant.

Selon une autre caractéristique possible, la deuxième diode et la deuxième résistance, sont montées en parallèle l'une par rapport à l'autre, mais également par rapport au transistor de charge et/ou par rapport au transistor de régulation.

Selon une autre caractéristique possible, la deuxième diode est connectée à la source et à la grille du transistor de charge et/ou connectée au collecteur et à la base du transistor de régulation.

Selon une autre caractéristique possible, la base et l'émetteur du transistor de régulation et la source du transistor de charge sont configurés pour être connectés à la borne négative de la batterie à charger.

Selon une autre caractéristique possible, la base du transistor de régulation et la source du transistor de charge sont configurées pour être connecté à la borne négative de la batterie à charger par l'intermédiaire d'une résistance, dite quatrième résistance.
La quatrième résistance permet notamment de limiter la valeur maximale du courant de charge.

Selon une autre caractéristique possible, ladite thermistance est du type à coefficient de température négatif.

L'invention se rapporte également à un système de gestion des accumulateurs de batterie, caractérisé en ce que ledit système de gestion comprend un circuit de commande tel que défini ci-dessus.

L'invention concerne en outre une batterie électrique, caractérisée en ce que ladite batterie comprend un système de gestion des accumulateurs de batterie tel que défini ci-dessus.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la [Fig.1] illustre une vue très schématique et fonctionnelle d'une batterie électrique équipée d'un système de gestion des accumulateurs de batterie selon l'invention ;
- la [Fig. 2] illustre une vue schématique d'un dispositif de régulation de courant de charge de batterie pour le système de gestion de la [Fig. 1].

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique. Sur les figures, les éléments communs à plusieurs figures conservent la même référence.

La [Fig. 1] illustre une vue très schématique et fonctionnelle d'une batterie 1 électrique, par exemple une batterie lithium-ion, avantageusement destinée à des applications aéronautiques ou aérospatiales, qui comprend des accumulateurs 2, ou cellules, de batterie, un système de gestion 3 des accumulateurs de batterie relié auxdits accumulateurs 2, système 3 également désigné sous l'acronyme anglais « BMS » pour « Battery Management System », ainsi qu'un circuit de communication 4 relié audit système de gestion 3 et configuré pour échanger des informations avec l'extérieur (informations relatives à l'environnement, à la batterie, à l'avion, etc.)

Ledit système de gestion 3 de gestion est généralement intégré à ladite batterie 1, afin de surveiller les différentes grandeurs physiques ou électriques caractéristiques d'une batterie 1 et/ou de ses accumulateurs 2, par exemple une tension, une résistance interne, etc.

Ledit système 3 de gestion est également configuré pour empêcher le fonctionnement de la batterie 1 en dehors de sa plage nominale de fonctionnement, c'est-à-dire que le système est configuré pour détecter des conditions anormales de fonctionnement de la batterie (ou de ses modules), telles qu'une surintensité, une surtension (notamment lors de sa charge), une sous-tension (notamment lors de sa décharge), une surchauffe, etc.

Un tel système 3 peut également comprendre d'autres circuits et/ou dispositifs notamment pour réguler le courant de charge à destination d'une batterie, ou d'une ou plusieurs cellules de batteries.

La [Fig. 2] illustre une vue très schématique et fonctionnelle d'un dispositif de régulation 6 d'un courant de charge pour une ou plusieurs cellules 2 (ou accumulateurs) de batterie, ledit dispositif 6 étant un quadripôle configuré pour relier le ou les cellules 2 de batteries à charger à un dispositif de charge 8, tel qu'un alternateur, une autre batterie, un chargeur, etc.

Ledit dispositif 6 est donc connecté, d'une part, aux bornes de la ou les cellules 2 (ou accumulateurs) de la batterie, d'autre part aux bornes du dispositif de charge 8. De plus, le dispositif 6 comprend au moins :
- au moins un transistor M₁, dit transistor de charge, configuré pour fonctionner en régime linéaire, ledit transistor de charge M₁ étant par exemple un transistor à effet de champs ;
- une thermistance R₁ configurée pour réguler en association avec le transistor de charge M₁ le courant de charge circulant du dispositif de charge 8 vers la ou les cellules 2 de batterie en fonction de la température.

La thermistance R₁ est avantageusement une thermistance à coefficient de température négatif et est couplée thermiquement avec le transistor de charge M₁, la thermistance R₁ présente donc une diminution de sa résistance avec l'augmentation de la température du transistor de charge M₁, ceci permettant de limiter, voire annuler, la réduction du courant de charge avec l'augmentation de la température dudit transistor M₁.

Ledit dispositif 6 comprend avantageusement un autre transistor T₁, dit transistor de régulation, qui est un transistor configuré pour imposer un fonctionnement en régime linéaire au premier transistor M₁. Le transistor de régulation T₁ est par exemple un transistor de type NPN (bipolaire).

Ledit transistor de charge M₁ présente une grille, un drain et une source, ladite grille étant configurée pour être connectée à la borne positive du dispositif de charge 8 et à la borne positive de la cellule 2 à charger, ledit drain étant, quant à lui, configuré pour être connecté à la borne négative du dispositif de charge 8, tandis que ladite source est connectée à la borne négative de la cellule 2 à charger.

Par ailleurs, le dispositif 6 comprend une diode D₁, dite première diode. La grille du transistor de charge M₁ est ainsi connectée à la borne positive du dispositif de charge 8 par l'intermédiaire de la première diode D₁ et de la thermistance R₁.

Le drain du transistor de charge M₁ est avantageusement connecté directement à la borne négative du dispositif de charge 8, c'est-à-dire qu'aucun composant (résistance, diode, etc.) n'est intercalé entre le drain et ladite borne négative dudit dispositif de charge 8.

Le dispositif 1 comprend donc une branche sur laquelle est montée en série la thermistance R₁, la diode D₁ et le transistor de charge M₁, cette branche étant connectée en parallèle du dispositif de charge 8 (avantageusement de manière directe, c'est-à-dire sans composants intercalés entre ladite branche et les bornes dudit dispositif de charge).

Par ailleurs, le transistor de régulation T₁ présente une base, un émetteur et un collecteur, le collecteur du transistor de régulation T₁ étant connecté à la grille du transistor de charge M₁, la base du transistor de régulation T₁ étant connectée à la source du transistor de charge M₁. Ainsi, le transistor de régulation T₁ est monté en parallèle du transistor de charge M₁, respectivement collecteur à grille et base à source.

Le transistor de régulation T₁ participe ainsi à la régulation de la tension aux bornes grille-source du transistor de charge M₁ pour maintenir celui-ci dans un régime linéaire de fonctionnement.

De plus, la base et l'émetteur du transistor de régulation T₁ et la source du transistor de charge M₁ sont configurés pour être connectés à la borne négative de la cellule 2 à charger.

Par ailleurs de manière avantageuse, le dispositif 6 comprend :
- une diode D₂, dite deuxième diode, connectée à la source et à la grille du transistor de charge M₁ et connectée au collecteur et à la base du transistor de régulation T₁ ;
- une résistance R₂, dite deuxième résistance, connectée à la source et à la grille du transistor de charge M₁ et connectée au collecteur et à la base du transistor de régulation T₁ (la deuxième résistance R₂ permettant entre autres d'avoir une tension nulle au niveau de la grille du transistor M₁ lorsque le circuit est non passant) ;
- une résistance R₃, dite troisième résistance, la base du transistor de régulation T₁ étant connectée à la source du transistor de charge M₁ par l'intermédiaire de ladite troisième résistance R₃ ;
- une résistance R₄, dite quatrième résistance, la base du transistor de régulation T₁ et la source du transistor de charge M₁ étant configurées pour être connecté à la borne négative de la cellule 2 à charger par l'intermédiaire de la quatrième résistance R₄, la quatrième résistance R₄ permet notamment de régler le potentiel de grille du transistor de charge M₁ et donc permet l'autorégulation autour de la tension linéaire du transistor de charge M₁).

On notera par ailleurs que les première et deuxième diodes D₁ et D₂ forment un pont diviseur de diodes, et que la première thermistance R₁ et la deuxième résistance R₂ forment un pont diviseur résistif, pont diviseur résistif dont la résistance R₁ permet la régulation du courant du transistor de charge M₁ en fonction de la température dudit transistor M₁.

On notera en outre que les bornes de la quatrième résistance R₄ sont connectées respectivement à l'émetteur du transistor de régulation T₁ (borne de la résistance également connectée à la borne négative de la cellule 2) et, par l'intermédiaire de la troisième résistance R₃, à la base du transistor de régulation T₁.

La deuxième diode D₂ et la deuxième résistance R₂ sont donc montées en parallèle l'une par rapport à l'autre, mais également par rapport au transistor de charge M₁ et au transistor de régulation T₁.

On notera par ailleurs que les première et deuxième diodes D₁ et D₂ sont avantageusement des diodes Zener. Ainsi, l'anode de la première diode D₁ est connectée à la grille du transistor de charge M₁, tandis que la cathode de la première diode D₁ est connectée à la première résistance R₁.

En outre, l'anode de la deuxième diode D₂ est connectée à la source du transistor de charge M₁ et à la base du transistor de régulation T₁ (notamment par l'intermédiaire de la troisième résistance R₃), tandis que la cathode de la deuxième diode D₂ est connectée à la grille du transistor de charge M₁ et au collecteur du transistor de régulation T₁.

Le collecteur du transistor de régulation T₁, la cathode de la diode D₂ et l'une des bornes de la deuxième résistance R₂ (l'autre borne de la deuxième résistance étant connecté à la source du transistor de charge), l'anode de la première diode D1, ainsi que la grille du transistor de charge M₁ sont donc connectés ensemble au niveau d'un noeud commun.

La base du transistor de régulation T₁ (par l'intermédiaire de la troisième résistance), l'anode de la deuxième diode D₂, l'autre borne de la deuxième résistance R₂, l'une des bornes de la quatrième résistance R₄, ainsi que la source du transistor de charge M₁ sont donc connectées ensemble au niveau d'un (autre) noeud commun.

La deuxième diode D₂ permet par ailleurs de limiter la tension aux bornes du transistor de charge M₁, notamment la tension entre la source et la grille dudit transistor de charge M₁.

De plus, l'association des première et deuxième diodes D₁ et D₂ permet de fermer le circuit lorsque le dispositif de charge 8 présente une tension inférieure à la somme des tensions des diodes D₁ et D₂, ou lorsqu'il n'y a pas de dispositif de charge 8 connecté, limitant ainsi la consommation électrique du dispositif 6 lorsque celui-ci n'est pas utilisé.

Dans des variantes de réalisation non représentées de l'invention, le dispositif de régulation 6 comprend :
- un optocoupleur, d'une part, connecté au drain du transistor de charge M₁ et, d'autre part, destiné à être connecté à la borne négative du dispositif de charge 8, et/ou ;
- un coupe-circuit, tel qu'un interrupteur, un organe de disjonction, un relais bistable, etc., d'une part, connecté à la première résistance R₁, et d'autre part, destiné à être connecté à la borne positive du dispositif de charge 8.

Ledit optocoupleur et/ou coupe-circuit sont ainsi configurés pour couper la charge de la batterie en cas d'anomalie de tension, courant, température, etc., ceci en ouvrant le circuit entre le dispositif de charge 8 et le dispositif de régulation 6.

## Revendications

1. Dispositif de régulation d'un courant de charge (6) pour une batterie (1), ledit dispositif étant un quadripôle configuré pour relier une batterie à un dispositif de charge (8),
ledit dispositif (6) comprenant au moins un premier transistor (M₁), dit transistor de charge, et une thermistance (R₁) qui sont configurés pour réguler, en association, le courant de charge de la batterie (1) en fonction de la température.

2. Dispositif (6) selon la revendication précédente,
**caractérisé en ce que** ledit premier transistor (M₁) est configuré pour fonctionner en régime linéaire.

3. Dispositif (6) selon la revendication précédente,
**caractérisé en ce que** ledit dispositif comprend un deuxième transistor (T₁), dit transistor de régulation, le deuxième transistor (T₁) étant configuré pour imposer un fonctionnement en régime linéaire au premier transistor (M₁).

4. Dispositif (6) selon l'une quelconque des revendications
précédentes, **caractérisé en ce que** ledit transistor de charge (M₁) présente une grille, un drain et une source, ladite grille étant configurée pour être connectée à la borne positive du dispositif de charge (8) et à la borne positive de la batterie à charger, ledit drain étant configuré pour être connecté à la borne négative du dispositif de charge (8).

5. Dispositif (6) selon la revendication précédente,
**caractérisé en ce que** la grille du transistor de charge (M₁) est configurée pour être connectée à la borne positive du dispositif de charge (8) par l'intermédiaire de la thermistance (R₁) et d'au moins une diode (D₁).

6. Dispositif (6) selon la revendication précédente,
**caractérisé en ce que** le transistor de régulation (T₁) présente une base, un émetteur et un collecteur, le collecteur du transistor de régulation (T₁) étant connecté à la grille du transistor de charge (M₁), la base du transistor de régulation (T₁) étant connectée à la source du transistor de charge (M₁).

7. Dispositif (6) selon la revendication précédente,
**caractérisé en ce que** la base du transistor de régulation (T₁) est connectée à la source du transistor de charge (M₁) par l'intermédiaire d'une résistance (R₃), dite troisième résistance.

8. Dispositif (6) selon la revendication précédente,
**caractérisé en ce que** la base et l'émetteur du transistor de régulation (T₁) et la source du transistor de charge (M₁) sont configurés pour être connectés à la borne négative de la batterie à charger.

9. Dispositif (6) selon la revendication précédente,
**caractérisé en ce que** la base du transistor de régulation (T₁) et la source du transistor de charge (M₁) sont configurées pour être connecté à la borne négative de la batterie à charger par l'intermédiaire d'une résistance (R₄), dite quatrième résistance.

10. Dispositif (6) selon l'une quelconque des revendications 5
à 9, **caractérisé en ce que** le dispositif (6) comprend une résistance (R₂), dite deuxième résistance, la thermistance (R₁) et la deuxième résistance (R₂) étant montées en un pont diviseur résistif.

11. Dispositif (6) selon l'une quelconque des revendications 5
à 10, **caractérisé en ce que** le dispositif (6) comprend une diode (D₂), dite deuxième diode, les première (D₁) et deuxième (D₂) diodes étant montées en un pont diviseur de diodes.

12. Dispositif (6) selon l'une quelconque des revendications
précédente, **caractérisé en ce que** ladite thermistance (R₁) est du type à coefficient de température négatif.

13. Système de gestion (3) des accumulateurs de batterie,
**caractérisé en ce que** ledit système de gestion (3) comprend un dispositif (6) de régulation selon l'une quelconque des revendications précédentes.

14. Batterie électrique (1), **caractérisée en ce que** ladite
batterie comprend un système de gestion (3) des accumulateurs de batterie selon la revendication précédente. 1
